# EUROPEAN PATENT SPECIFICATION

(11) **EP 3 015 250 B1**
(45) Date of publication and mention of the grant of the patent: **08.09.2021**
(21) Application number: 15191527.9
(22) Date of filing: 26.10.2015
(51) Int. Cl.: B29C 65/02

(54) **METHOD AND CONNECTION SYSTEM**
VERFAHREN UND VERBINDUNGSSYSTEM
PROCÉDÉ ET SYSTÈME DE RACCORDEMENT

(30) Priority: 28.10.2014 NL 2013696
(43) Date of publication of application: 04.05.2016
(73) Proprietor: Nyloplast Europe B.V., 3295 KG 's-Gravendeel (NL)
(72) Inventor: Bakker, Dick, 3295 KG 's-Gravendeel (NL)
(74) Representative: Hooiveld, Arjen Jan Winfried

(56) References cited:
- EP-A2- 0 341 494
- DE-A1- 2 441 332
- FR-A1- 2 033 178
- GB-A- 1 147 385
- JP-A- S54 154 475
- JP-A- 2002 011 792

## Description

The present invention relates to a connection system comprising a first pipe and a second pipe connected transversely thereto, wherein both pipes comprise an amorphous thermoplastic.

The invention also relates to a method for effecting a connection between a first pipe comprising an amorphous thermoplastic and a second pipe comprising an amorphous thermoplastic, which is to be connected transversely thereto.

It is noted that the invention is not limited to pipes having a purely circular cross-section, but that it also relates to pipes having a non-circular cross-section, such as an oval or angular cross-section. It is further noted that the first pipe and the second pipe are connected at a random angle (not in line with each other), and that the term "transversely" does not exclusively relate to a perpendicular connection between the two pipes. Finally it is noted that the connection system according to the invention can be used not only in sewer systems, but also in other applications, for example drainage systems, rainwater drainage systems, water mains systems, ventilation systems, gas pipe (CO₂, flue gases) systems and the like.

Such a connection system and such a method, which are for example used in a pipe system, for example a (usually underground) sewer system, are generally known. The first pipe in that case forms a main pipe, whilst the second pipe forms a branch pipe. The main pipe and the branch pipe are produced in an injection-moulding process, wherein a viscous plastic is injected into an injection mould at high pressure and wherein the pipe in question is removed from the injection mould after the plastic has cooled.

The known connection system has the drawback that the injection-moulding process used therewith provides little or no flexibility as regards selectively connecting the two pipes at a different angle relative to each other.

The object of the present invention is to improve the prior art, that is, in particular to provide a connection system and method for realising a high-quality and mechanically sufficiently strong connection between plastic pipes without being limited to a fixed angle of the two pipes relative to each other.

In order to achieve that object, the connection system according to the invention is defined in claim 1.

The amorphous thermoplastic has in particular been selected from the group of plastics consisting of styrene butadiene (SB), acrylonitrile butadiene styrene (ABS), polyvinyl chloride (PVC), polystyrene (PS), polycarbonate (PC) and polymethyl methacrylate (PMMA), polyarylate (PAR), styrene acrylonitrile (SAN), polyphenylene sulfone (PSU). Surprisingly it is possible to realise a gas- and/or liquid-tight welded joint with these amorphous thermoplastics, in particular with PVC.

In a preferred embodiment of a connection system according to the invention, the first pipe comprises, on the outer surface thereof, an upright circumferential edge extending along the circumference of an opening in a wall of the first pipe, to which circumferential edge a free end of the second pipe is connected. The circumferential edge and the second pipe preferably have at least substantially the same wall thickness.

In another preferred embodiment of a connection system according to the invention, the wall of the first pipe is entirely made from one plastic or from a recycled plastic material. In another preferred variant, the wall of the first pipe is made up of at least two - preferably fused-together - layers, wherein the first layer comprises the amorphous thermoplastic and the second layer comprises a recycled material. The wall of the first pipe is in that case preferably made up of a core layer with upper layers provided on either side thereof, wherein the upper layers comprise the amorphous thermoplastic and wherein the core layer comprises the recycled material. The recycled material preferably comprises the amorphous thermoplastic.

In another preferred embodiment of a connection system according to the invention, the first pipe and the second pipe are made from the same plastic material, in particular PVC. The first pipe and the second pipe have virtually no internal projecting parts at the location of their welded joint, with any projecting parts not projecting by more than 3 mm, preferably by less than 2 mm. The removal of projecting parts takes place either manually or mechanically. In the latter case, use is preferably made of a plug than can move to and fro in the second pipe.

In another preferred embodiment of a connection system according to the invention, the first pipe and the second pipe include an angle α with each other, wherein α meets the equation O°<α≤90°, and wherein α preferably at least substantially equals 45°.

As already indicated, the invention also relates to a method for effecting a - preferably liquid- and/or gas-tight connection between a first pipe comprising an amorphous thermoplastic and a second pipe comprising an amorphous thermoplastic, which is to be connected transversely thereto, characterised in that the first pipe and the second pipe are welded together to form a joint, wherein at least some of the molecular chains of the plastic in the first pipe on the one hand and at lease some of the molecular chains of the plastic in the second pipe on the other hand extend at least substantially in the same direction at the location of the joint. The first pipe is provided, on the outer surface thereof, with an upright circumferential edge extending along the circumference of an opening in a wall of the first pipe, to which circumferential edge a free end of the second pipe is connected by welding. The circumferential edge is formed on the first pipe in the following manner. First, the first pipe is provided with a branch connection having a blind end, which is made in one piece with the first pipe and which extends transversely thereto. The blind end is then removed (for example sawed off) to form the circumferential edge. The branch connection and the second pipe have the same diameter and are made in one piece using a "thermoforming" or "blowing" process. The first pipe and the second pipe have preferably been extruded from a plastic material. In the circumferential edge, the molecular chains of the plastic are according to the invention oriented in the same direction so as to realise a gas- and/or liquid-tight connection with the second pipe.

In a preferred embodiment of a method according to the invention, the first and the second pipe are connected to a pipe system. The pipe system is in particular a sewer system, a drainage system, a rainwater drainage system, a water mains system, a ventilation system or a gas pipe (CO₂, flue gas) system.

Japanese patent application JP 2002 011792 relates to a branching and connecting method for thermoplastic resin pipe, and to a branch pipe employed for the connecting method, wherein the branch pipe is welded to a main pipe through fusion welding by friction heat. As a result of the friction, there is no question of molecular chains of the resin in the main pipe on the one hand and the branch pipe on the other hand extending at least partially in the same direction, seen in the longitudinal direction of the branch pipe, at the location of the connection between the main pipe and the branch pipe.

British patent application GB 1, 147, 385 A relates to methods for forming pipe branches of a synthetic thermoplastic material e.g. hard PVC or hard polyethylene, which is hard at room temperature. A connection between a main pipe and a branch pipe wherein at least some of the molecular chains of the resin in the main pipe on the one hand and at least some of the molecular chains of the resin in the branch pipe on the other hand extend at least substantially in the same direction is not disclosed in said application, either.

The invention will now be explained in more detail with reference to figures illustrated in a drawing, in which:
- Figure 1 shows in various cross-sectional views and a detail view thereof the connecting of two pipes according to a preferred variant of the invention;
- Figure 2 shows in cross-sectional view an additional processing step to be carried out after the two pipes of figure 1 have been connected together.

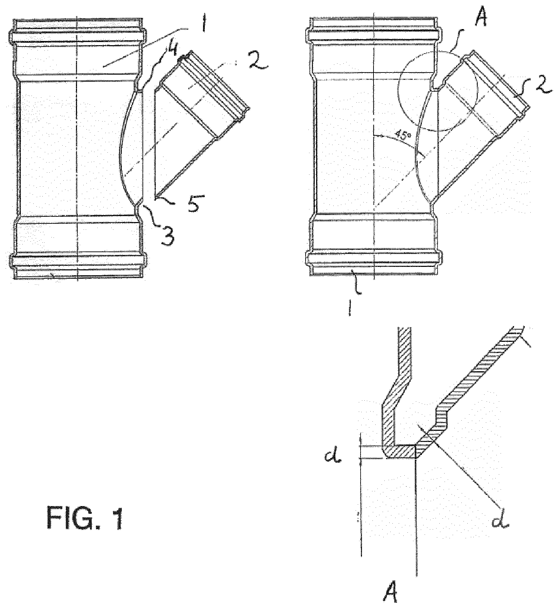

In figure 1 two pipes 1, 2 of extruded PVC are shown in cross-sectional view, with the pipes 1, 2 shown in unconnected condition on the left and in connected condition on the right. In order to be able to connect the PVC pipes 1, 2, the first pipe 1, which functions as a main pipe, is provided with a branch connection or "wedge" 3. The branch connection 3 has been made in one piece therewith, using a "thermoforming" process, for example, and extends transversely to the first pipe 1. In order to enable the branch connection 3 as a connecting piece for the second pipe 2, which functions as a "branch", the blind end thereof has been sawed off to form a circumferential edge 4. A free end 5 of the second pipe 2 has been mirror-welded to the circumferential edge 4 so as to obtain a liquid-tight joint. As figure 1 shows, the branch connection 3 and the second tube 2 have the same diameter. As the detail A at the bottom of figure 1 shows, the pipes 1, 2 have the same wall thickness d.

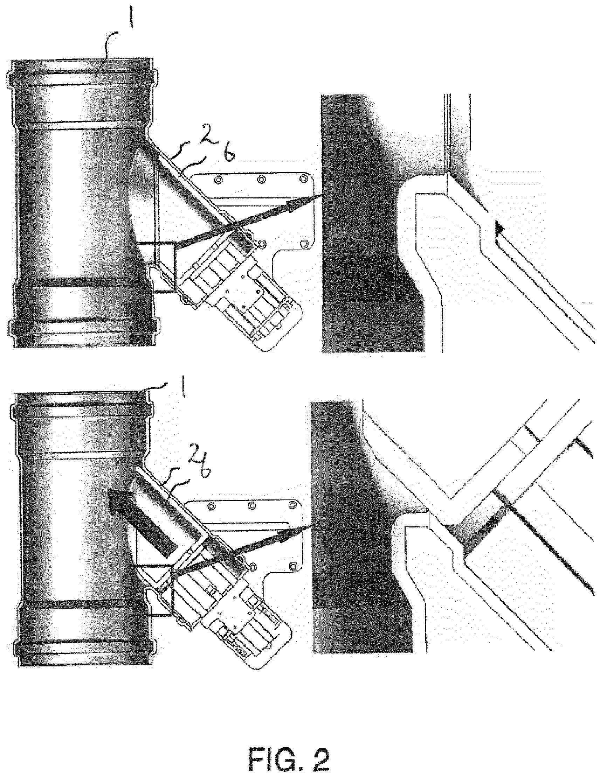

To smoothen the inner side of the mirror-welded joint between the two pipes 1, 2, use has been made of a plug 6. The plug 6 makes a reciprocating motion, i.e. an instroke and an outstroke, so as to remove internal projecting parts (figure 2).

The invention is not limited to the embodiment shown herein, but it also extends to other preferred variants that fall within the scope of the appended claims.

## Claims

1. A connection system comprising a first pipe (1) and a second pipe (2) connected transversely thereto, wherein both pipes (1,2) comprise an amorphous thermoplastic, **characterised in that** the first pipe (1) and the second pipe (2) are welded together to form a joint, wherein between 30% and 100% of the molecular chains of the plastic in the first pipe (1) on the one hand and between 30% and 100% of the molecular chains of the plastic in the second pipe (2) on the other hand extend at least substantially in the same direction at the location of the joint, seen in longitudinal direction of the second pipe (2).

2. A connection system according to claim 1, wherein the amorphous thermoplastic has been selected from the group of plastics consisting of styrene butadiene (SB), acrylonitrile butadiene styrene (ABS), polyvinyl chloride (PVC), polystyrene (PS), polycarbonate (PC) and polymethyl methacrylate (PMMA), polyarylate (PAR), styrene acrylonitrile (SAN), polyphenylene sulfone (PSU).

3. A connection system according to claim 1 or 2, wherein the first pipe (1) and the second pipe (2) are mirror-welded together.

4. A connection system according to claim 1, 2 or 3, wherein the first pipe (1) and the second pipe (2) are connected together in a liquid- and/or gas-tight manner.

5. A connection system according to any one of the preceding claims 1-4, wherein , the first pipe (1) comprises, on the outer surface thereof, an upright circumferential edge (4) extending along the circumference of an opening in a wall of the first pipe (1), to which circumferential edge (4) a free end (5) of the second pipe (2) is connected.

6. A connection system according to claim 5, wherein the circumferential edge (4) and the second pipe (2) have at least substantially the same wall thickness.

7. A connection system according to any one of the preceding claims 1-6, wherein the wall of the first pipe (1) is entirely made from one plastic or from a recycled plastic material.

8. A connection system according to any one of the preceding claims 1-6, wherein the wall of the first pipe (1) is made up of at least two layers, wherein the first layer comprises the amorphous thermoplastic and the second layer comprises a recycled material.

9. A connection system according to claim 8, wherein the wall of the first pipe (1) is made up of a core layer with upper layers provided on either side thereof, wherein the upper layers comprise the amorphous thermoplastic and wherein the core layer comprises the recycled material.

10. A connection system according to claim 9, wherein the recycled material comprises the amorphous thermoplastic.

11. A connection system according to claim 9 or 10, wherein the core layer and the upper layers are fused together.

12. A connection system according to any one of the preceding claims 1-11, wherein the first pipe (1) and the second pipe (2) are made from the same plastic material.

13. A connection system according to any one of the preceding claims 1-12, wherein the first pipe (1) and the second pipe (2) have virtually no internal projecting parts at the location of their welded joint.

14. A connection system according to claim 13, wherein any projecting parts do not project by more than 3 mm, preferably between 0.5 and 3 mm.

15. A connection system according to any one of the preceding claims 1-14, wherein the first pipe (1) and the second pipe (2) include an angle α with each other, wherein α meets the equation O°<α≤90°, and wherein α preferably at least substantially equals 45°.

16. A method for effecting a connection between a first pipe
(1) comprising an amorphous thermoplastic and a second pipe
(2) comprising an amorphous thermoplastic, which is to be connected transversely thereto, **characterised in that** the first pipe (1) and the second pipe (2) are welded together to form a joint, wherein at least some of the molecular chains of the plastic in the first pipe (1) on the one hand and at least some of the molecular chains of the plastic in the second pipe (2) on the other hand extend at least substantially in the same direction at the location of the joint, wherein the first pipe (1) is provided, on the outer surface thereof, with an upright circumferential edge (4) extending along the circumference of an opening in a wall of the first pipe (1), to which circumferential edge (4) a free end (5) of the second pipe (2) is connected by welding,
wherein the first pipe (1) is provided with a branch connection (3) having a blind end, which is made in one piece with the first pipe (1) and which extends transversely thereto, and wherein the blind end is removed to form the circumferential edge (4),
wherein the branch connection (3) and the second pipe (2) have the same diameter,
wherein the first pipe (1) and the branch connection (3) are made in one piece using a thermoforming or blowing process.

17. A method according to claim 16, wherein the first (1) and the second pipe (2) are connected together in a liquid-and/or gas-tight manner.

18. A method according to claim 16 or 17, wherein the first (1) and the second pipe (2) are connected to a pipe system.

## Patentansprüche

1. Verbindungssystem, das eine erste Rohrleitung (1) und eine quer damit verbundene zweite Rohrleitung (2) aufweist, wobei beide Rohrleitungen (1, 2) einen amorphen Thermoplast aufweisen, **dadurch gekennzeichnet, dass** die erste Rohrleitung (1) und die zweite Rohrleitung (2) aneinander geschweißt sind, um eine Verbindung zu bilden, wobei zwischen 30% und 100% der Molekülketten des Kunststoffs in der ersten Rohrleitung (1) einerseits und zwischen 30% und 100% der Molekülketten des Kunststoffs in der zweiten Rohrleitung (2) andererseits sich an dem Ort der Verbindung in der Längsrichtung der zweiten Rohrleitung (2) gesehen wenigstens im Wesentlichen in der gleichen Richtung erstrecken.

2. Verbindungssystem nach Anspruch 1, wobei der amorphe Thermoplast aus der Gruppe von Kunststoffen ausgewählt wird, die aus Styrolbutadien (SB), Acrylnitril-Butadien-Styrol (ABS), Polyvinylchlorid (PVC), Polystyrol (PS), Polykarbonat (PC) und Polymethylmethacrylat (PMMA), Polyarylat (PAR), Styrol-Acrylnitril (SAN), Polyphenylensulfon (PSU) besteht.

3. Verbindungssystem nach Anspruch 1 oder 2, wobei die erste Rohrleitung (1) und die zweite Rohrleitung (2) miteinander spiegelverschweißt sind.

4. Verbindungssystem nach Anspruch 1, 2 oder 3, wobei die erste Rohrleitung (1) und die zweite Rohrleitung (2) in einer flüssigkeits- und/oder gasdichten Weise miteinander verbunden sind.

5. Verbindungssystem nach einem der vorhergehenden Ansprüche 1-4, wobei die erste Rohrleitung (1) auf ihrer Außenoberfläche einen aufrechten Umfangsrand (4) aufweist, der sich entlang des Umfangs einer Öffnung in einer Wand der ersten Rohrleitung (1) erstreckt, wobei mit diesem Umfangsrand (4) ein freies Ende (5) der zweiten Rohrleitung (2) verbunden ist.

6. Verbindungssystem nach Anspruch 5, wobei der Umfangsrand (4) und die zweite Rohrleitung (2) wenigstens im Wesentlichen die gleiche Wanddicke haben.

7. Verbindungssystem nach einem der vorhergehenden Ansprüche 1-6, wobei die Wand der ersten Rohrleitung (1) vollkommen aus einem Kunststoff oder aus einem recycelten Kunststoffmaterial hergestellt ist.

8. Verbindungssystem nach einem der vorhergehenden Ansprüche 1-6, wobei die Wand der ersten Rohrleitung (1) aus bis zu wenigstens zwei Schichten hergestellt ist, wobei die erste Schicht den amorphen Thermoplast aufweist und die zweite Schicht ein recyceltes Material aufweist.

9. Verbindungssystem nach Anspruch 8, wobei die Wand der ersten Rohrleitung (1) aus einer Kernschicht mit oberen Schichten, die auf jeder ihrer Seiten bereitgestellt sind, besteht, wobei die oberen Schichten den amorphen Thermoplast aufweisen, und wobei die Kernschicht das recycelte Material aufweist.

10. Verbindungssystem nach Anspruch 9, wobei das recycelte Material den amorphen Thermoplast aufweist.

11. Verbindungssystem nach Anspruch 9 oder 10, wobei die Kernschicht und die oberen Schichten miteinander verschmolzen sind.

12. Verbindungssystem nach einem der vorhergehenden Ansprüche 1 - 11, wobei die erste Rohrleitung (1) und die zweite Rohrleitung (2) aus dem gleichen Kunststoffmaterial hergestellt sind.

13. Verbindungssystem nach einem der vorhergehenden Ansprüche 1 - 12, wobei die erste Rohrleitung (1) und die zweite Rohrleitung (2) praktisch keine innen vorstehenden Teile an dem Ort ihrer Schweißverbindung haben.

14. Verbindungssystem nach Anspruch 13, wobei jegliche vorstehenden Teile nicht um mehr als 3 mm, vorzugsweise zwischen 0,5 und 3 mm, vorstehen.

15. Verbindungssystem nach einem der vorhergehenden Ansprüche 1 - 14, wobei die erste Rohrleitung (1) und die zweite Rohrleitung (2) einen Winkel □ miteinander einschließen, wobei □ die Gleichung 0° < □ ≤ 90° erfüllt, und wobei □ vorzugsweise wenigstens gleich 45° ist.

16. Verfahren zum Herbeiführen einer Verbindung zwischen einer ersten Rohrleitung (1), die einen amorphen Thermoplast aufweist, und einer zweiten Rohrleitung (2), die einen amorphen Thermoplast aufweist, die quer damit verbunden werden soll, **dadurch gekennzeichnet, dass** die erste Rohrleitung (1) und die zweite Rohrleitung (2) aneinander geschweißt werden, um eine Verbindung zu bilden, wobei wenigstens einige der Molekülketten des Kunststoffs in der ersten Rohrleitung (1) einerseits und wenigstens einige der Molekülketten des Kunststoffs in der zweiten Rohrleitung (2) andererseits sich an dem Ort der Verbindung wenigstens im Wesentlichen in der gleichen Richtung erstrecken, wobei die erste Rohrleitung (1) auf ihrer Außenoberfläche mit einem aufrechten Umfangsrand (4) versehen ist, der sich entlang des Umfangs einer Öffnung in einer Wand der ersten Rohrleitung (1) erstreckt, wobei mit diesem Umfangsrand (4) ein freies Ende (5) der zweiten Rohrleitung (2) durch Schweißen verbunden ist, wobei die erste Rohrleitung (1) mit einer Zweigverbindung (3) mit einem blinden Ende versehen ist, das in einem Stück mit der ersten Rohrleitung (1) hergestellt ist und das sich quer dazu erstreckt, und wobei das blinde Ende entfernt wird, um den Umfangsrand (4) zu bilden, wobei die Zweigverbindung (3) und die zweite Rohrleitung (2) den gleichen Durchmesser haben, wobei die erste Rohrleitung (1) und die Zweigverbindung (3) unter Verwendung eines Thermoform- oder Blasverfahrens in einem Stück hergestellt werden.

17. Verfahren nach Anspruch 16, wobei die erste (1) und die zweite Rohrleitung (2) in einer flüssigkeits- und/oder gasdichten Weise verbunden werden.

18. Verfahren nach Anspruch 16 oder 17, wobei die erste (1) und die zweite Rohrleitung (2) mit einem Rohrleitungssystem verbunden sind.

## Revendications

1. Système de raccordement comprenant un premier tuyau (1) et un second tuyau (2) raccordés l'un à l'autre transversalement, dans lequel les deux tuyaux (1, 2) comprennent un thermoplastique amorphe, **caractérisé en ce que** le premier tuyau (1) et le second tuyau (2) sont soudés conjointement pour former un raccord, dans lequel entre 30 % et 100 % des chaînes moléculaires du plastique dans le premier tuyau (1) d'une part et entre 30 % et 100 % des chaînes moléculaires du plastique dans le second tuyau (2) d'autre part s'étendent au moins sensiblement dans la même direction à l'emplacement du raccord, en vue dans la direction longitudinale du second tuyau (2).

2. Système de raccordement selon la revendication 1, dans lequel le thermoplastique amorphe est sélectionné dans le groupe de plastiques se composant de styrène butadiène (SB), acrylonitrile butadiène styrène (ABS), polychlorure de vinyle (PVC), polystyrène (PS), polycarbonate (PC) et polyméthyle méthacrylate (PMMA), polyarylate (PAR), styrène acrylonitrile (SAN), polyphénylène sulfone (PSU).

3. Système de raccordement selon la revendication 1 ou 2, dans lequel le premier tuyau (1) et le second tuyau (2) sont soudés l'un à l'autre en miroir.

4. Système de raccordement selon la revendication 1, 2 ou 3, dans lequel le premier tuyau (1) et le second tuyau (2) sont raccordés l'un à l'autre d'une manière étanche aux liquides et/ou aux gaz.

5. Système de raccordement selon l'une quelconque des revendications 1 à 4 précédentes, dans lequel le premier tuyau (1) comprend, sur la surface extérieure de celui-ci, un bord circonférentiel vertical (4) s'étendant le long de la circonférence d'une ouverture dans une paroi du premier tuyau (1), auquel bord circonférentiel (4) est raccordée une extrémité libre (5) du second tuyau (2).

6. Système de raccordement selon la revendication 5, dans lequel le bord circonférentiel (4) et le second tuyau (2) ont au moins sensiblement la même épaisseur de paroi.

7. Système de raccordement selon l'une quelconque des revendications 1 à 6 précédentes, dans lequel la paroi du premier tuyau (1) est entièrement constituée d'un plastique ou d'un matériau plastique recyclé.

8. Système de raccordement selon l'une quelconque des revendications 1 à 6 précédentes, dans lequel la paroi du premier tuyau (1) est constituée d'au moins deux couches, dans lequel la première couche comprend le thermoplastique amorphe et la seconde couche comprend un matériau recyclé.

9. Système de raccordement selon la revendication 8, dans lequel la paroi du premier tuyau (1) est constituée d'une couche centrale avec des couches supérieures fournies de chaque côté de celle-ci, dans lequel les couches supérieures comprennent le thermoplastique amorphe et dans lequel la couche centrale comprend le matériau recyclé.

10. Système de raccordement selon la revendication 9, dans lequel le matériau recyclé comprend le thermoplastique amorphe.

11. Système de raccordement selon la revendication 9 ou 10, dans lequel la couche centrale et les couches supérieures sont fusionnées ensemble.

12. Système de raccordement selon l'une quelconque des revendications 1 à 11 précédentes, dans lequel le premier tuyau (1) et le second tuyau (2) sont constitués du même matériau plastique.

13. Système de raccordement selon l'une quelconque des revendications 1 à 12 précédentes, dans lequel le premier tuyau (1) et le second tuyau (2) n'ont pratiquement pas de parties saillantes internes à l'emplacement de leur raccord soudé.

14. Système de raccordement selon la revendication 13, dans lequel toute partie saillante ne fait pas saillie de plus de 3 mm, de préférence entre 0,5 et 3 mm.

15. Système de raccordement selon l'une quelconque des revendications 1 à 14 précédentes, dans lequel le premier tuyau (1) et le second tuyau (2) incluent un angle α l'un par rapport à l'autre, dans lequel α respecte l'équation 0°<α≤90°, et dans lequel α est de préférence au moins sensiblement égal à 45°.

16. Procédé pour effectuer un raccordement entre un premier tuyau (1) comprenant un thermoplastique amorphe et un second tuyau (2) comprenant un thermoplastique amorphe, qui doivent être raccordés l'un à l'autre transversalement, **caractérisé en ce que** le premier tuyau (1) et le second tuyau (2) sont soudés l'un à l'autre pour former un raccord, dans lequel au moins certaines des chaînes moléculaires du plastique dans le premier tuyau (1) d'une part et au moins certaines des chaînes moléculaires du plastique dans le second tuyau (2) d'autre part s'étendent au moins sensiblement dans la même direction à l'emplacement du raccord, dans lequel le premier tuyau (1) est pourvu, sur la surface extérieure de celui-ci, d'un bord circonférentiel vertical (4) s'étendant le long de la circonférence d'une ouverture dans une paroi du premier tuyau (1), auquel bord circonférentiel (4) est raccordée par soudage une extrémité libre (5) du second tuyau (2),
dans lequel le premier tuyau (1) est pourvu d'un raccordement de branchement (3) ayant une extrémité borgne, qui est constitué d'un seul tenant avec le premier tuyau (1) et qui s'étend transversalement par rapport à celui-ci, et dans lequel l'extrémité borgne est retirée pour former le bord circonférentiel (4),
dans lequel le raccordement de branchement (3) et le second tuyau (2) ont le même diamètre,
dans lequel le premier tuyau (1) et le raccordement de branchement (3) sont constitués d'un seul tenant en utilisant un processus de thermoformage ou de soufflage.

17. Procédé selon la revendication 16, dans lequel le premier tuyau (1) et le second tuyau (2) sont raccordés l'un à l'autre d'une manière étanche aux liquides et/ou aux gaz.

18. Procédé selon la revendication 16 ou 17, dans lequel le premier tuyau (1) et le second tuyau (2) sont raccordés à un système de tuyau.
